# EUROPÄISCHE PATENTANMELDUNG

(11) **EP 0 563 690 A1**
(43) Veröffentlichungstag der Anmeldung: **06.10.1993**
(21) Anmeldenummer: 93104404.4
(22) Anmeldetag: 18.03.1993
(51) Int. Cl.: G01N 27/49

(54) **Elektrochemische Messzelle zum Nachweis einer in Wasser gelösten Spezies**

(30) Priorität: 03.04.1992 DE 4211198
(71) Anmelder: PROMINENT DOSIERTECHNIK GMBH, D-69123 Heidelberg (DE)
(72) Erfinder: Reiss, Gerhard, Dr., W-6940 Weinheim (DE)
(74) Vertreter: Knoblauch, Andreas, Dr.-Ing.

(57) **Zusammenfassung**

Es wird eine elektrochemische Meßzelle zum Nachweis einer in Wasser gelösten Spezies angegeben mit einer Meßelektrode (9), einer Bezugselektrode (6), einer Gegenelektrode (14) und einem durch eine Membran (3) abgedeckten und mit einem Elektrolyten (5) gefüllten Elektrolytraum (4).

Mit einer derartigen Meßzelle soll auch an organisches Trägermaterialien gebundenes Chlor und/oder Brom nachgewiesen werden, wobei annähernd gleiche Meßergebnisse erzielt werden können wie bei einer chemischen Analyse.

Hierzu ist die Meßelektrode (9) innerhalb und die Gegenelektrode (14) außerhalb des Elektrolytraumes (4) angeordnet.

## Beschreibung

Die Erfindung betrifft eine elektrochemische Meßzelle zum Nachweis einer in Wasser gelösten Spezies mit einer Meßelektrode, einer Bezugselektrode, einer Gegenelektrode und einem durch eine Membran abgedeckten und mit einem Elektrolyten gefüllten Elektrolytraum.

Derartige Meßzellen sind an sich bekannt. Durch chemische Reaktionen entstehen zwischen der Meßelektrode und der Gegenelektrode elektrische Signale, die gegebenenfalls über die Bezugselektrode auf ein vorgegebenes Potential normiert werden können. Derartige Meßelektroden haben den Vorteil, daß sie gegenüber chemische Analyseverfahren relativ schnell Ergebnisse über den Nachweis bzw. die Konzentration der gesuchten Spezies liefern. In bestimmten Fällen haben sie jedoch bisher versagt. Dies betrifft beispielsweise die Messung von in Wasser gelöstem Chlor in Form von unterchloriger Säure HOCl oder gelöstem Brom in Form von unterbromiger Säure HOBr bzw. von Chlor oder Brom, das an organische Verbindungen, wie Cyanursäure oder Dimethylhydantoin (im folgenden Halogenträger genannt), gebunden ist.

Lösungen mit Chlor oder Brom werden zur Wasserdesinfektion eingesetzt, so daß es hier wünschenswert ist, ebenfalls eine schnelle und auch kostengünstige Analysemöglichkeit zur Verfügung zu haben.

Mit herkömmlichen Meßzellen, die mit zwei oder drei Elektroden arbeiten und bei denen die Elektroden entweder direkt mit dem im folgenden als "Meßwasser" bezeichneten zu untersuchenden Stoff in Verbindung stehen oder von ihm durch eine Membran getrennt sind, erfassen nicht das an Cyanursäurederivate oder Dimethylhydantoinderivate gebundene Chlor und/oder Brom. Dies verursacht teilweise große Differenzen zwischen einer international angewendeten chemischen Bestimmungsmethode dieser Desinfektionsmittel mittels N,N'-Diäthyl-1,4-phenylen-diamin (DPD) und den bisher bekannten elektrochemischen Meßsystemen. Während bei der chemischen Bestimmungsmethode sowohl die unterchlorige bzw. unterbromige Säure als auch das an Halogenträger gebundene Chlor bzw. Brom reagiert, erfaßt die elektrochemische Messung das an Halogenträger gebundene Chlor bzw. Brom eben nicht. Die chemische Bestimmungsmethode liefert also einen höheren Wert. Die Meßwerte der bisher bekannten elektrochemischen Meßsysteme können so klein sein, daß ein Abgleich dieser Meßsysteme auf den mit der chemischen Methode (DPD) ermittelten Wert nicht möglich ist. Das Problem verschärft sich, da die Meßwerte der bekannten elektrochemischen Meßsysteme stark von der Konzentration der organischen Verbindungen, wie Cyanursäure bzw. Dimethylhydantoin, abhängig sind. So verändert sich das Meßsignal der elektrochemischen Meßsysteme, wenn die Cyanursäure- bzw. die Dimethylhydantoinkonzentration sich verändert, obwohl der DPD-Meßwert unverändert bleibt.

Wie sich aus den folgenden Hydrolysegleichgewichtsreaktionen von Tri-, Di- und Monochlorcyanursäure und von 1-Brom-3-Chlor-5,5-Dimethylhydantoin, nämlich

C₃Cl₃N₃O₃ + H₂O <---> C₃HCl₂N₃O₃ + HOCl [1]

C₃HCl₂N₃O₃ + H₂O <---> C₃H₂ClN₃O₃ + HOCl [2]

C₃H₂ClN₃O₃ + H₂O <---> C₃H₃N₃O₃ + HOCl [3]

C₅H₆BrClN₂O₂ + 2H₂O <---> C₅H₈H₂N₂O₂ + HOCl + HOBr [4]

ergibt, bildet sich laufend unterchlorige bzw. unterbromige Säure und Cyanursäure bzw. Dimethylhydantoin, so daß tatsächlich eine Notwendigkeit besteht, das gesamte Chlor bzw. Brom ermitteln zu können.

Der vorliegenden Erfindung liegt daher die Aufgabe zugrunde, neben der unterchlorigen bzw. unterbromigen Säure auch das an organische Tägermaterialien, wie Cyanursäure oder Hydantoin, gebundene Chlor und/oder Brom nachweisen zu können.

Diese Aufgabe wird mit einer elektrochemischen Meßzelle der eingangs genannten Art dadurch gelöst, daß die Meßelektrode innerhalb und die Gegenelektrode außerhalb des Elektrolytraumes angeordnet ist. Aus Gründen der Anschaulichkeit befaßt sich die folgende Erläuterung beispielhaft mit Cyanursäure oder Dimethylhydantoin, die überwiegend zum Zwecke der Wasserdesinfektion verwendet werden. Grundsätzlich ist die Erfindung aber auch dann anwendbar, wenn andere organische Verbindungen verwendet werden, die ein ähnliches Verhalten zeigen, also eine elektrochemische Reaktion des gebundenen Chlors bzw. Brom verhindern.

Das im folgenden teilweise kurz als "Desinfektionsmittel" bezeichnete an Cyanursäure oder Dimethylhydantoin gebundene Chlor oder Brom diffundiert durch die Membran in den Elektrolytraum, kann dort chemisch reagieren und erreicht die Meßelektrode. An der Meßelektrode kann nun eine elektrochemische Umsetzung stattfinden, die zu einem entsprechenden Stromfluß führt. Umgekehrt finden natürlich auch elektrochemische Reaktionen an der Gegenelektrode statt. Durch die Membran wird aber verhindert, daß diese Reaktionsprodukte bis zur Meßelektrode gelangen und diese zusetzen bzw. zerstören. Man kann daher die elektrischen Eigenschaften der Meßzelle so konzipieren, daß sie primär auf die elektrochemische Umsetzungen an der Meßelektrode ausgerichtet sind, weniger jedoch daran, daß die an der Gegenelektrode entstehenden chemischen Reaktionsprodukte keine schädigenden Einfluß auf die Meßelektrode haben dürfen. Die Gegenelektrode ist vom Meßwasser umspült, so daß an der Gegenelektrode entstehende Reaktionsprodukte relativ schnell abtransportiert werden. Es besteht daher auch keine Gefahr, daß sie durch die Membran diffundieren und schließlich die Meßelektrode erreichen.

Mit Vorteil ist zwischen der Meßelektrode und der Membran eine im Vergleich zur Tiefe des Elektrolytraums dünne Schicht des Elektrolyten angeordnet. Diese Schicht bestimmt neben der Membran, die insbesondere als mikroporöse Membran ausgebildet ist, die Diffusion. Je dünner diese Schicht ist, desto schneller kann die Meßzelle Veränderungen im Meßwasser erfassen. Umgekehrt verhindert diese Schicht einen Kontakt von Meßelektrode und Membran.

Mit Vorteil ist zwischen der dünnen Schicht und dem übrigen Teil des Elektrolytraums eine Sperrwand angeordnet, die eine im Vergleich zu ihrer Flächenausdehnung kleine Öffnung aufweist. Über die Öffnung kann ein Austausch des Elektrolyten der dünnen Schicht mit dem Elektrolytvorrat aus dem übrigen Teil des Elektrolytraums stattfinden. Da die Öffnung aber klein ist, kann der Austausch nur relativ langsam vonstatten gehen. Es stellen sich also quasi statische Bedingungen ein. Trotzdem kann es aufgrund dieses Aufbaus sehr lange dauern, bis der Elektrolyt "verbraucht" ist.

Hierbei ist von Vorteil, daß die Sperrwand als Träger für die Meßelektrode dient. Die Meßelektrode wird dadurch in den gewünschten Abstand zur Membran gehalten.

Auch ist hier von Vorteil, daß die Meßelektrode eine die kleine Öffnung freigebende Elektrodenöffnung aufweist. Der Austausch des Elektrolyten zwischen der dünnen Schicht und dem übrigen Teil des Elektrolytraums erfolgt also in unmittelbarer Nachbarschaft der Meßelektrode. Außerdem wird hierdurch ein stabiler mechanischer Aufbau erreicht, da die Sperrwand allseitig an anderen Gehäuseteilen befestigt werden kann.

Vorteilhafterweise ist die Öffnung mit einem Diaphragma verschlossen. Hierdurch werden die Eigenschaften des Elektrolyten über die Zeit noch weiter vergleichmäßigt.

In einer ganz besonders bevorzugten Ausgestaltung weist der Elektrolyt mindestens eine Hilfssubstanz auf, die mit der Spezies reagiert, wobei als ein Reaktionsprodukt ein elektrochemisch reaktionsfähiger Stoff entsteht. Das Desinfektionsmittel diffundiert also durch die Membran und erreicht den Elektrolyten. In dem Elektrolyten findet eine vollständige chemische Umsetzung des Desinfektionsmittels statt, d.h. es wird eine zur Menge der nachzuweisenden Spezies im Desinfektionsmittel äquivalente Menge des Reaktionsproduktes gebildet. Dieses wird, nachdem es bis zur Meßelektrode vorgedrungen ist, vollständig an der Meßelektrode umgesetzt. Die gebildete Menge dieses Reaktionsprodukts ist also proportional zur Konzentration des Desinfektionsmittels. Der Strom aus der Reaktion des Reaktionsproduktes ist proportional zur Menge des gebildeten Reaktionsprodukts und damit ist der Strom proportional zur Konzentration des Desinfektionsmittels im Wasser. Durch die Reaktion an der Meßelektrode kann des Reaktionsprodukt wieder in die Hilfssubstanz bzw. einen Teil davon zurückgebildet werden, so daß für weitere Reaktion wieder Hilfssubstanz in ausreichendem Maße zur Verfügung steht.
Der Elektrolyt kann als Hilfssubstanz beispielsweise Kaliumjodid enthalten. Die chemische Reaktion ergibt sich für Trichlorcyanursäure und 1-Brom-3-Chlor-5,5-Dimethylhydantoin nach folgender Reaktion:

C₃Cl₃N₃O₃ + 6 KJ + 3 H₂O --> C₃H₃N₃O₃ + 3 J₂ + 3 KCl + 3 KOH [5]

C₅H₆BrClN₂O₂ + 4 KJ + 2 H₂O --> C₅H₈N₂O₂ + 2 J₂ + KCl + KBR + 2 KOH [6]

Vorhandene unterchlorige Säuren HOCl oder unterbromige Säure HOBr reagieren ebenfalls mit Kaliumjodid unter Bildung von elektrochemisch nachweisbarem Jod J₂ gemäß den folgenden Reaktionen:

HOCl + 2 KJ --> KOH + KCl + J₂ [7]

HOBr + 2 KJ --> KOH + KBr + J₂ [8]

Das gebildete Jod wird an der Meßelektrode zu Jodid umgesetzt. Damit bildet sich das bei der chemischen Reaktion verbrauchte Jodid wieder zurück.

3 J₂ + 6 e⁻ --> 6 J⁻ [9]

Mittels eines Potentiostaten ist das Potential der Meßelektrode so eingestellt, daß sofort alles an der Elektrodenoberfläche ankommende Jod elektrochemisch reagiert, d.h. dieses elektrochmische System befindet sich im Diffusionsgrenzstrombetrieb, bei dem gilt

i = n F A D C/L [10]

- i =: Signalstrom
- n =: Elektrodenreaktionswertigkeit
- F =: Faraday-Konstante
- A =: Meßelektrodenfläche
- D =: Diffusionskoeffizient
- C =: Konzentration des Desinfektionsmittels im Wasser
- L =: Wegstrecke der Diffusion
Insbesondere bei dieser Ausführungsform macht sich der Vorteil der Meßzelle bemerkbar. Stünde die Gegenelektrode auch mit dem Elektrolyten in Verbindung, so würde sich an ihr aufgrund der anodischen Gegenreaktion Jod entsprechend der folgenden Beziehung bilden:

2 J⁻ --> J₂ + 2 e⁻ [11]

Dieses würde durch den Elektrolyten diffundieren und nach einiger Zeit die Meßelektrode erreichen. Damit würde die Meßzelle unbrauchbar werden. Da die Gegenelektrode aber außerhalb des Elektrolytraumes liegt und vom Meßwasser umspült ist, stören die Reaktionsprodukte der anodischen Umsetzung an der Gegenelektrode nicht den Meßvorgang an der Meßelektrode.

Mit Vorteil sind mehrere Meßelektroden im Elektrolytraum angeordnet, deren Potentiale unabhängig voneinander einstellbar sind. Hiermit lassen sich unabhängig voneinander mehrere Spezies nachweisen.

Dies ist auch dann besonders vorteilhaft, wenn jeder Meßelektrode mindestens eine Hilfssubstanz zugeordnet ist. In diesem Fall können die Raktionsprodukte für jede der nachzuweisenden Spezies ermittelt werden. Für jede Meßelektrode kann eine eigene Gegenelektrode vorhanden sein.

Eine weitere vorteilhafte Ausgestaltung wird dadurch erreicht, daß der Elektrolyt einen Puffer enthält. Bei bisher bekannten elektrochemischen Meßzellen können nur die unterchlorigen bzw. unterbromigen Säuren gemessen werden, nicht aber das Hypochlorit bzw. Hypobromit. Verändert sich der pH-Wert des Wassers, so ändert sich bei den bisher bekannten elektrochemischen Meßzellen in fälschlicher Weise das Meßsignal. Um die unterchlorige (HOCl) oder unterbromige Säure (HOBr) auch pH-unabhängig messen zu können, enthält der Elektrolyt einen Puffer oder eine Puffersubstanz, die den pH-Wert im Bereich der Meßelektrodenoberfläche auf einen konstanten geeigneten Wert einstellt. Als beispiel sei ein pH-Wert des gepufferten Elektrolyten von 6 angenommen. Bei pH 6 liegt das chemische Gleichgewicht fast vollständig auf der Seite der unterchlorigen Säure (HOCl). Ist der pH-Wert einer Wasserprobe beispielsweise höher, so liegen entsprechende Mengen an Hypochlorit-Ionen (OCl⁻) vor.

Beide Spezies diffundieren entsprechend ihrem Verhältnis ins Meßwasser durch die mikroporöse Membran und gelangen in die Elektrolytschicht mit einem pH-Wert von 6. Hier wird das chemische Gleichgewicht zwischen HOCl und OCl- auf die Seite von unterchloriger Säure (HOCl) verschoben und damit praktisch vollständig dem elektrochemischen Nachweis zugängig gemacht. Eine Änderung des pH-Wertes im Meßwasser hat dadurch nur einen geringen Einfluß auf das Meßsignal der elektrochemischen Meßzelle. Auch hier ergibt sich durch die Trennung der Umgebungen von Gegenelektrode und Meßelektrode mit Hilfe der Membran der Vorteil, daß die Gegenelektrode nicht mit dem Elektrolyten in Berührung kommt. An der Meßelektrode wird Chlor bzw. Brom in Form von unterchloriger Säure bzw. unterbromiger Säure zu Chlorid bzw. Bromid umgesetzt.

HOCl + 2 e⁻ --> Cl⁻ + OH⁻ [14]

HOBr + 2 e⁻ --> Br⁻ + OH⁻ [15]

Würde sich die Gegenelektrode im Elektrolyten befinden, so würde an ihr aus Chlorid bzw. Bromid wieder unterchlorige bzw. unterbromige Säure gebildet. Diese würde durch den Elektrolyten diffundieren und nach einiger Zeit die Meßelektrode erreichen, wodurch die Meßzelle unbrauchbar würde. Da aber die Gegenelektrode direkt vom Meßwasser umspült ist, werden die hier gebildeten Reaktionsprodukte relativ rasch entfernt, so daß sie hier nicht stören.

Die Erfindung wird im folgenden anhand von bevorzugten Ausführungsbeispielen in Verbindung mit der Zeichnung beschrieben. Darin zeigen:
- Fig. 1: eine schematische Querschnittsansicht einer Meßzelle und
- Fig. 2: eine schematische Draufsicht auf eine andere Ausgestaltung einer Meßzelle.

Eine elektrochemische Meßzelle 1 weist ein Gehäuse 2 auf, das zusammen mit einer mikroporösen, d.h. den Durchgang von elektrischen Ladungsträgern erlaubenden, Membran 3 einen Elektrolytraum 4 umschließt. Der Elektrolytraum 4 ist mit einem Elektrolyten 5 gefüllt.

Mit einem vorgegebenen kleinen Abstand zu der Membran ist eine Zwischenwand 6 angeordnet, so daß sich zwischen der Membran 3 und der Zwischenwand 6 eine im Verhältnis zur Tiefe des Elektrolytraums dünne Schicht 7 des Elektrolyten ausbildet. Die Schicht 7 steht über eine im Vergleich zur Flächenausdehung der Zwischenwand 6 kleine Öffnung 8, einen sogenannten Elektrolytschlüssel, mit dem übrigen Elektrolytraum 4 in Verbindung.

Auf der Zwischenwand 6 ist eine Meßelektrode 9 so angeordnet, daß mindestens eine Elektrodenfläche zur Membran 3 hin weist. Der Elektrolytschlüssel 8 verläuft durch die Meßelektrode 9 hindurch. Die Meßelektrode 9 ist über eine Leitung 10 mit einem Potentiostaten 11 verbunden.

Im Elektrolytraum 4 ist weiterhin eine Bezugselektrode 12 angeordnet, die über eine elektrische Leitung 13 mit dem Potentiostaten 11 verbunden ist. Im übrigen sind die Meßelektrode 9 und die Bezugselektrode 12 elektrisch voneinander isoliert.

Auf der Außenseite des Gehäuses 2 ist eine Gegenelektrode 14 angeordnet, die über eine Leitung 15 mit dem Potentiostaten verbunden ist. Die Gegenelektrode 14 ist von der Meßelektrode 9 nicht nur elektrisch isoliert, sondern auch durch die Membran 3 umgebungsmäßig getrennt.

Die Meßzelle 1 wird in die zu messende Flüssigkeit, das Meßwasser, eingesetzt oder einer Strömung des Meßwassers ausgesetzt. Ein in dem Meßwasser enthaltenes Desinfektionsmittel, beispielsweise Chlor oder Brom und an Cyanursäurederivate oder Dimethylhydantoinderivate gebundenes Chlor und/oder Brom diffundiert durch die Membran 3 in den Elektrolytraum 4. Wenn der Elektrolyt 5 eine Substanz enthält, beispielsweise Kaliumjodid, die mit diesen Desinfektionsmitteln reagiert und dabei eine Substanz freisetzt, z.B. Jod, die elektrochemisch umsetzbar ist, läßt sich wegen der dann an der Meßelektrode 9 ablaufenden chemischen Reaktion mit Hilfe des Potentiostaten 11 ein elektrisches Signal gewinnen, das die Konzentration des Desinfektionsmittels im Meßwasser recht gut wiedergibt. Durch diese elektrochemische Reaktion wird die Substanz, im vorliegenden Fall Jod, auch wieder zurückgebildet, so daß kein "Verbrauch" der Meßzelle erfolgt.

In einer anderen Ausgestaltung kann der Elektrolyt 4 gepuffert sein, so daß eine Änderung des pH-Werts im Meßwasser nur einen geringen Einfluß auf das Meßsignal der dargestellten Meßzelle hat.

In beiden Fällen stören nämlich die durch eine elektrochemische Reaktion an der Gegenelektrode 14 gebildeten Reaktionsprodukte nicht, da diese Reaktionsprodukte nicht unmittelbar zur Meßelektrode gelangen können. Den Weg dorthin versperrt die Membran 3, so daß diese Reaktionsprodukte zum allergrößten Teil vom Meßwasser wieder entfernt werden. Außerdem kann man dafür sorgen, daß im Elektrolyten chemische Reaktionen stattfinden, die zu einer verbesserten elektrochemischen Erfaßbarkeit der Substanz führen, ohne daß man größere Rücksichten auf das Meßwasser nehmen muß.

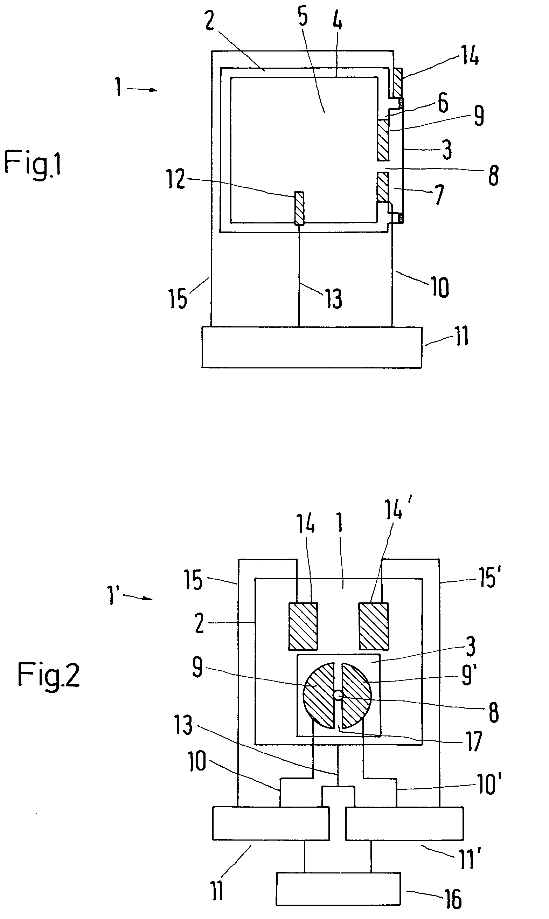

Fig. 2 zeigt eine andere Ausgestaltung einer elektrochemischen Meßzelle 1', bei der Teile, die denen der Fig. 1 entsprechen, mit gleichen Bezugszeichen versehen sind. Die Meßzelle 1' weist eine Mehrfachelektrodenanordnung auf, die mit beispielsweise zwei Meßelektroden 9 und 9' ausgerüstet ist. Entsprechend sind auch zwei Gegenelektroden 14, 14' außerhalb des Gehäuses 2 angeordnet. Auch im vorliegenden Fall trennt die Membran 3 die Umgebungen der Meßelektroden 9, 9' und der Gegenelektroden 14, 14'. Die Meßelektroden 9, 9' befinden sich im Elektrolyten, während die Gegenelektroden 14, 14' direkt dem Meßwasser ausgesetzt sind.

Die beiden Potentiostaten 11, 11' sind noch mit einer Auswerteeinrichtung 16 verbunden. Obwohl beide Meßelektroden 9, 9' auf der gemeinsamen Zwischenwand als Träger angeordnet sind, sind sie durch einen Isolationsstreifen 17 elektrisch voneinander getrennt. Die Meßelektroden können aus dem gleichen Material bestehen, sie können aber auch aus unterschiedlichen Elektrodenmaterialien gebildet sein. Dies ist vom Anwendungszweck abhängig. Als Elektrodenmaterialien, auch für die Gegenelektroden 14, 14' und die nur in Fig. 1 dargestellte Bezugselektrode 12 können beispielsweise Gold, Platin, Palladium, Silber, andere geeignete Metalle oder Metalloxide oder elektrisch leitende Kunststoffe Verwendung finden.

Mit der Ausgestaltung der Meßstelle nach Fig. 2, bei der mehrere Meßelektroden 9, 9' von der gemeinsamen Membran 3 bedeckt sind, kann man einerseits unterschiedliche elektrokatalytische Aktivitäten von verschiedenen Materialien ausnutzen, um die Meßzelle für eine Spezies selektiver zu machen, oder man kann gleichzeitig mehrere verschiedene Spezies elektrochemisch nachweisen. Die Bezugselektrode und der Elektrolyt werden hierbei gemeinsam benutzt. Es werden aber zwischen den Meßelektroden 9, 9' und in zugeordneten Gegenelektroden 14, 14' eigene "Meßstrecken" aufgebaut, mit denen man jeweils die speziellen Spezies messen kann.

Dies sei beispielhaft für einen Fall beschrieben, bei dem Chlor und Chlordioxid als Desinfektionsmittel im Meßwasser nebeneinander vorliegen. Es werden, wie dargestellt, zwei Meß-/Gegenelektrodenpaare 9, 14 und 9', 14' und damit auch zwei Potentiostaten 11, 11' benötigt. Die eine der membranbedeckten Meßelektroden 9 wird elektrochemisch so betrieben, daß sie nur ein Signal liefert, das proportional zu der Chlordioxidkonzentration ist. Die andere von der gleichen Membran 3 bedeckte Meßelektrode 9' wird elektrochemisch so betrieben, daß sie ein Summensignal liefert, das sowohl der Chlordioxidkonzentration als auch der Chlorkonzentration proportional ist. Durch Differenzbildung von Summensignal minus Chlordioxidsignal in der Auswerteeinrichtung 16 erhält man das Chlorsignal.

## Patentansprüche

1. Elektrochemische Meßzelle zum Nachweis einer in Wasser gelösten Spezies mit einer Meßelektrode, einer Bezugselektrode, einer Gegenelektrode und einem durch eine Membran abgedeckten und mit einem Elektrolyten gefüllten Elektrolytraum, dadurch gekennzeichnet, daß die Meßelektrode (9, 9') innerhalb und die Gegenelektrode (14, 14') außerhalb des Elektrolytraumes (4) angeordnet ist.

2. Meßzelle nach Anspruch 1, dadurch gekennzeichnet, daß zwischen der Meßelektrode (9, 9') und der Membran (3) eine im Vergleich zur Tiefe des Elektrolytraums (4) dünne Schicht (7) des Elektrolyten (5) angeordnet ist.

3. Meßzelle nach Anspruch 1 oder 2, dadurch gekennzeichnet, daß zwischen der dünnen Schicht (7) und dem übrigen Teil des Elektrolytraums (4) eine Sperrwand (6) angeordnet ist, die eine im Vergleich zu ihrer Flächenausdehnung kleine Öffnung (8) aufweist.

4. Meßzelle nach Anspruch 3, dadurch gekennzeichnet, daß die Sperrwand (6) als Träger für die Meßelektrode (9) dient.

5. Meßzelle nach Anspruch 4, dadurch gekennzeichnet, daß die Meßelektrode (9) eine die kleine Öffnung (8) freigebende Elektrodenöffnung aufweist.

6. Meßzelle nach einem der Ansprüche 1 bis 5, dadurch gekennzeichnet, daß die Öffnung mit einem Diaphragma verschlossen ist.

7. Meßzelle nach einem der Ansprüche 1 bis 6, dadurch gekennzeichnet, daß der Elektrolyt (5) mindestens eine Hilfssubstanz aufweist, die mit der Spezies reagiert, wobei als ein Reaktionsprodukt ein elektrochemisch reaktionsfähiger Stoff entsteht.

8. Meßzelle nach Anspruch 7, dadurch gekennzeichnet, daß der Elektrolyt (5) als Hilfssubstanz Kaliumjodid enthält.

9. Meßzelle nach einem der Ansprüche 1 bis 8, dadurch gekennzeichnet, daß mehrere Meßelektroden (9, 9') im Elektrolytraum (4) angeordnet sind, deren Potentiale unabhängig voneinander einstellbar sind.

10. Meßzelle nach Anspruch 9, dadurch gekennzeichnet, daß jeder Meßelektrode (9, 9') mindestens eine Hilfssubstanz zugeordnet ist.

11. Meßzelle nach einem der Ansprüche 1 bis 10, dadurch gekennzeichnet, daß der Elektrolyt (5) einen Puffer enthält.
